# EUROPEAN PATENT APPLICATION

(11) **EP 4 518 004 A1**
(43) Date of publication of application: **05.03.2025**
(21) Application number: 24741400.6
(22) Date of filing: 28.02.2024
(51) Int. Cl.: H01M 50/502, H02J 7/00

(54) **BATTERY PACK AND ELECTRIC VEHICLE**

(30) Priority: 01.08.2023 CN 202310958343; 01.08.2023 CN 202322046999 U
(71) Applicant: Eve Energy Co., Ltd., Huizhou, Guangdong 516006 (CN)
(72) Inventor: LIAO, Hulong, Huizhou, Guangdong 516006 (CN)
(74) Representative: HGF
(86) International application number: PCT/CN2024/078915
(87) International publication number: WO 2024/149406

(57) **Abstract**

Provided are a battery pack and an electric vehicle. The battery pack includes multiple cells (110), a flexible composite busbar (210), a battery energy distribution module (120), a control module (130), and an external interface (140). The flexible composite busbar (210) is connected to the cells (110). The battery energy distribution module (120) is connected to the flexible composite busbar (210). The control module (130) is connected to the battery energy distribution module (120) and configured to control the battery energy distribution module (120) to be disconnected. The external interface (140) is connected to the control module (130) and configured to be connected to an external circuit. A circuit for connecting the battery energy distribution module (120) to the external interface (140) is configured to be a high-voltage circuit (10), a circuit for connecting the control module (130) to the external interface (140) is configured to be a low-voltage circuit (20), and the low-voltage circuit (20) and the high-voltage circuit (10) are arranged separately.

## Description

This application claims priority to Chinese Patent Application No. 202310958343.8 filed with the China National Intellectual Property Administration (CNIPA) on Aug. 1, 2023 and Chinese Patent Application No. 202322046999.0 filed with the CNIPA on Aug. 1, 2023, the disclosures of which are incorporated herein by reference in their entireties.

### TECHNICAL FIELD

The present application relates to the technical field of new energy vehicles, for example, a battery pack and an electric vehicle.

### BACKGROUND

With the development of new energy vehicles, battery packs of the new energy vehicles are gradually developed from a Cell to Module (CTM) architecture to a Cell to Pack (CTP) architecture. In the CTP architecture, cells are directly integrated into a battery pack so that the assembly steps required in the traditional module architecture are omitted and the battery pack is more compact and integrated. The CTP architecture improves the energy density of the battery pack and presents a new challenge to the reasonability of the internal design of the battery pack. Due to a relatively small space and a relatively compact structure inside the battery pack, the battery pack has relatively poor impact resistance and control reliability.

### SUMMARY

The present application provides a battery pack and an electric vehicle to enhance the impact resistance and control reliability of the battery pack.

In a first aspect, an embodiment of the present application provides a battery pack. The battery pack includes multiple cells; a flexible composite busbar connected to the multiple cells; a battery energy distribution module connected to the flexible composite busbar; a control module connected to the battery energy distribution module and configured to control the battery energy distribution module to be turned on and off; and an external interface connected to the control module and configured to be connected to an external circuit. A circuit for connecting the battery energy distribution module to the external interface is configured to be a high-voltage circuit, a circuit for connecting the control module to the external interface is configured to be a low-voltage circuit, and the low-voltage circuit and the high-voltage circuit are arranged separately.

In an embodiment, the flexible composite busbar includes an electrode O-temper aluminum busbar and a flexible copper busbar, the electrode O-temper aluminum busbar is fixed on an electrode of the multiple cells, one end of the flexible copper busbar is connected to the electrode O-temper aluminum busbar, and the other end of the flexible copper busbar is connected to the battery energy distribution module.

In an embodiment, the multiple cells are arranged in a central area of the battery pack, the high-voltage circuit runs through the central area of the battery pack, the low-voltage circuit is disposed on a side of the central area of the battery pack, and the high-voltage circuit is parallel to the low-voltage circuit.

In an embodiment, the flexible composite busbar further includes a composite busbar holder configured to support the flexible copper busbar.

In an embodiment, the multiple cells are connected by a flexible integrated busbar, the flexible integrated busbar includes a cell O-temper aluminum busbar, a flexible circuit board, and a busbar holder; and the cell O-temper aluminum busbar is fixed on the multiple cells by the busbar holder, the flexible circuit board is disposed on a side of the busbar holder, and the busbar holder is configured to support the cell O-temper aluminum busbar and the flexible circuit board.

In an embodiment, the battery energy distribution module includes a positive battery energy distribution unit and a negative battery energy distribution unit, a positive terminal of the multiple cells is connected to a power supply terminal of the positive battery energy distribution unit by the flexible composite busbar, and a negative terminal of the multiple cells is connected to a power supply terminal of the negative battery energy distribution unit by the flexible composite busbar.

In an embodiment, the external interface includes a fast charging interface, a discharging interface, a slow charging interface, and a communication interface. A positive terminal of the fast charging interface is connected to a fast charging positive terminal of the positive battery energy distribution unit, a negative terminal of the fast charging interface is connected to a fast charging negative terminal of the negative battery energy distribution unit, and a data terminal of the fast charging interface is connected to the control module. A positive terminal of the discharging interface is connected to a discharging positive terminal of the positive battery energy distribution unit, a negative terminal of the discharging interface is connected to a discharging negative terminal of the negative battery energy distribution unit, and a data terminal of the discharging interface is connected to the control module. A positive terminal of the slow charging interface is connected to a slow charging positive terminal of the positive battery energy distribution unit, the slow charging interface is connected to a slow charging negative terminal of the negative battery energy distribution unit, and a data terminal of the slow charging interface is connected to the control module. The communication interface is connected to the control module. The battery pack further includes a housing, the fast charging interface and the discharging interface are disposed on a first side edge of the housing, the slow charging interface and the communication interface are disposed on a second side edge of the housing, and the first side edge and the second side edge are opposite to each other.

In an embodiment, the battery energy distribution module further includes a positive current acquisition unit and a negative current acquisition unit. The positive current acquisition unit is connected in series in the positive battery energy distribution unit and the negative current acquisition unit is connected in series in the negative battery energy distribution unit. The positive current acquisition unit is configured to acquire a current of the positive battery energy distribution unit and the negative current acquisition unit is configured to acquire a current of the negative battery energy distribution unit. The positive current acquisition unit and the negative current acquisition unit are located at an area between an area where the fast charging interface and the discharging interface are located and an area where the multiple cells are located. The high-voltage circuit includes a circuit for connecting the multiple cells to the battery energy distribution module and circuits for connecting the battery energy distribution module to the fast charging interface, the discharging interface, and the slow charging interface.

In an embodiment, the control module includes a master board and at least one slave board. A fast charging data terminal of the master board is connected to the fast charging interface. A slow charging data terminal of the master board is connected to the slow charging interface. A discharging data terminal of the master board is connected to the discharging interface. A first communication terminal of the master board is connected to the communication interface. A first control terminal of the master board is connected to a control terminal of the positive battery energy distribution unit. A second control terminal of the master board is connected to a control terminal of the negative battery energy distribution unit. A positive current acquisition terminal of the master board is connected to the positive current acquisition unit. A negative current acquisition terminal of the master board is connected to the negative current acquisition unit. The master board is configured to acquire charging and discharging data and perform external communication. A data acquisition terminal of the slave board is connected to the multiple cells. A communication terminal of the slave board is connected to a second communication terminal of the master board. The at least one slave board is configured to acquire a temperature of the multiple cells and a voltage of the multiple cells. The low-voltage circuit includes a circuit for connecting the master board to the at least one slave board, a circuit for connecting the master board to the communication interface, and a circuit for connecting the at least one slave board to the multiple cells.

In an embodiment, the battery pack is provided with voltage and temperature acquisition interfaces, the voltage and temperature acquisition interfaces are configured to output voltage data of the multiple cells and temperature data of the multiple cells, the voltage and temperature acquisition interfaces are connected to the at least one slave board, and the voltage and temperature acquisition interfaces are disposed on a second side of the multiple cells, where the second side of the multiple cells is a side adjacent to the second side edge of the housing.

In an embodiment, the master board and the battery energy distribution module are disposed on the same side of the housing, and the at least one slave board is disposed on a side of the housing away from the master board.

In a second aspect, an embodiment of the present application provides an electric vehicle. The electric vehicle includes the battery pack according to any one of the preceding embodiments.

The present application has the beneficial effects below.

In the embodiments of the present application, the flexible composite busbar is used as the connection structure in the battery pack, and the flexible composite busbar is directly connected to the cells so that an output electrode fixing base is not disposed in the cells; a production error between components of the battery pack and impact during use of the battery pack are absorbed due to the characteristic of bendability of the flexible composite busbar; and the high-voltage circuit and the low-voltage circuit are arranged separately so that an overlapping length between the low-voltage circuit and the high-voltage circuit is reduced and an effect of the high-voltage circuit on the low-voltage circuit is reduced. Such design architecture in the embodiments of the present application facilitates the assembly of the battery pack, improves production efficiency, and enhances the impact resistance and control reliability of the battery pack.

### BRIEF DESCRIPTION OF THE DRAWINGS

FIG. 1 is a schematic diagram of a battery pack according to an embodiment of the present application.
FIG. 2 is a diagram of the architecture of a battery pack according to an embodiment of the present application.
FIG. 3 is a partial enlarged view of a battery pack according to an embodiment of the present application.
FIG. 4 is a schematic diagram of an electric vehicle according to an embodiment of the present application.

### DETAILED DESCRIPTION

It is to be noted that terms such as "first" and "second" in the description, claims, and above drawings of the present application are used for distinguishing between similar objects and are not used for describing a particular order or sequence. It is to be understood that data used in this manner are interchangeable where appropriate so that the embodiments of the present application described herein can be implemented in an order not illustrated or described herein. Additionally, terms "including" and "having" and any other variations thereof are intended to encompass a non-exclusive inclusion. For example, a process, method, system, product, or apparatus that includes a series of steps or units not only includes the expressly listed steps or units but may also include other steps or units that are not expressly listed or are inherent to such process, method, product, or apparatus.

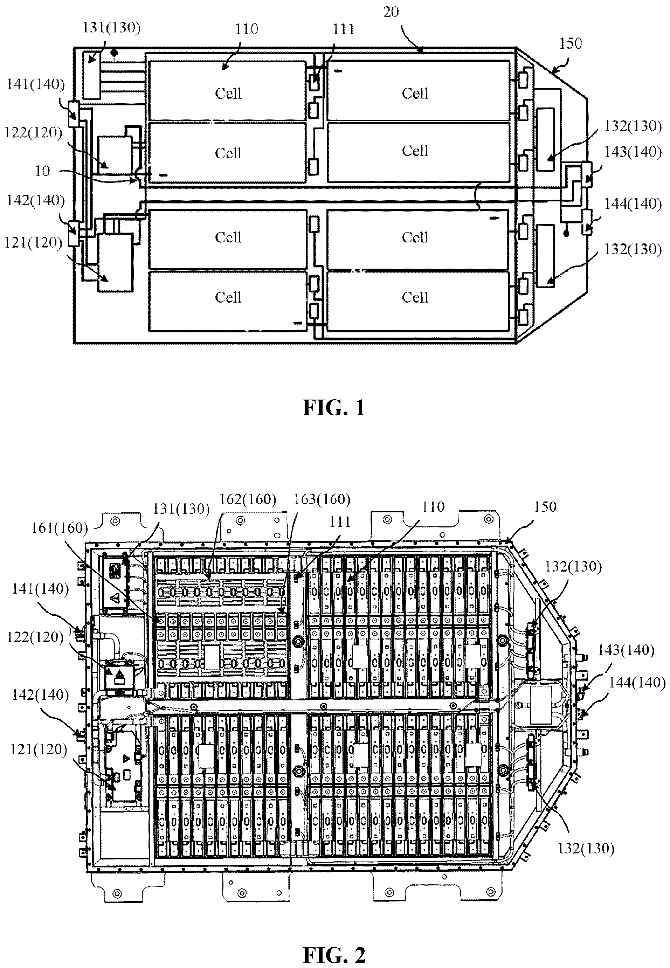

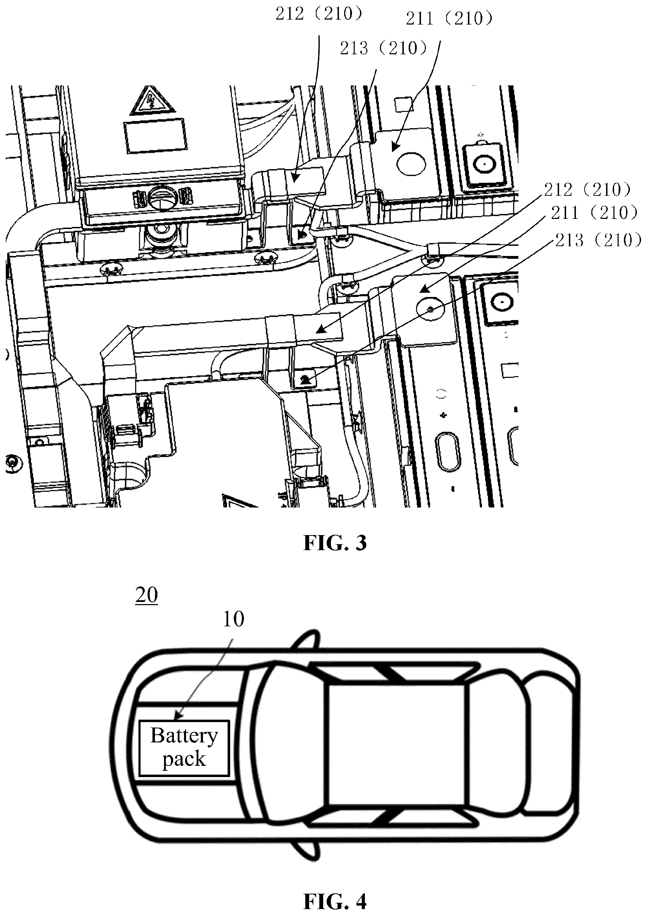

Embodiments of the present application provide a battery pack. The battery pack provides a new architecture for an energy system of an electric vehicle. FIG. 1 is a schematic diagram of a battery pack according to an embodiment of the present application. FIG. 2 is a diagram of the architecture of a battery pack according to an embodiment of the present application. FIG. 3 is a partial enlarged view of a battery pack according to an embodiment of the present application. Referring to FIGS. 1 to 3, the battery pack includes multiple cells 110, a flexible composite busbar 210, a battery energy distribution module 120, a control module 130, and an external interface 140.

The flexible composite busbar 210 is connected to the cells 110. The battery energy distribution module 120 is connected to the flexible composite busbar 210. The control module 130 is connected to the battery energy distribution module 120 and configured to control the battery energy distribution module 120 to be turned on and turned off. The external interface 140 is connected to the control module 130 and configured to be connected to an external circuit. A circuit for connecting the battery energy distribution module 120 to the external interface 140 is configured to be a high-voltage circuit 10, a circuit for connecting the control module 130 to the external interface 140 is configured to be a low-voltage circuit 20, and the low-voltage circuit and the high-voltage circuit are arranged separately.

As can be readily appreciated, the flexible composite busbar 210 may serve as a power source busbar, and the flexible composite busbar 210 is connected between a power source and the battery energy distribution module 120 so that electrical energy can be provided for the battery energy distribution module 120 and the electrical energy stored in the cells 110 can be transmitted to the outside. The flexible composite busbar 210 has relatively good flexibility, can be bent, and has good impact resistance. Additionally, limited by process conditions, multiple components of the battery pack have a certain error. The error between the multiple components in the production process of the battery pack is eventually fed back into the assembly of the battery pack. During assembly, a relatively large error between components causes a risk of an assembly failure. Therefore, the connection structure of the flexible composite busbar 210 is used in the battery pack so that the production error between the multiple components of the battery pack is absorbed due to the characteristic of bendability of the flexible composite busbar 210.

The battery energy distribution module 120 includes a battery energy distribution unit (BDU) and controls the power-on and power-off processes, pre-charging process, and charging process of a high-voltage electrical circuit. The battery energy distribution module 120 is directly connected to the cells 110 by the flexible composite busbar 210 so that the output electrode fixing base is not disposed in the cells 110. For example, the flexible composite busbar 210 is connected to the cells 110 by a bolt.

Briefly speaking, the low-voltage circuit 20 is configured to transmit an external communication signal to the control module 130 and transmit a control signal to the battery energy distribution module 120. Therefore, the low-voltage circuit 20 has a relatively high requirement on the accuracy of signal transmission.

It is to be understood that during external discharging or charging of the battery pack, the high-voltage circuit 10 may generate a magnetic effect of the current, and a certain magnetic field is generated within a certain range around the high-voltage circuit 10. The magnetic effect of the current refers to that any conducting wire through which a current flows can generate a magnetic field around. Since the high-voltage circuit 10 bears loads of electrical components in the whole vehicle, a relatively large current flows through the high-voltage circuit 10 during charging or discharging, and the magnetic effect of the current through the high-voltage circuit 10 is relatively strong. Therefore, during the operation of the battery pack, relatively strong electromagnetic interference exists around the high-voltage circuit 10. When the low-voltage circuit 20 is relatively close to the high-voltage circuit 10, the high-voltage circuit 10 causes interference to the low-voltage circuit 20.

Referring to FIGS. 1 and 2, for example, the cells are disposed at a central position of the battery pack and separate the high-voltage circuit 10 from the low-voltage circuit 20. The high-voltage circuit 10 is disposed on a first side edge of the battery pack and at the central position of the battery pack, and the low-voltage circuit 20 is disposed on the four side edges of the battery pack.

In the embodiments of the present application, the flexible composite busbar is used as the connection structure in the battery pack and directly connected to the cells 110 so that the output electrode fixing base is not disposed in the cells 110; the production error between the multiple components of the battery pack and impact during use of the battery pack are absorbed due to the characteristic of bendability of the flexible composite busbar 210; and the high-voltage circuit 10 and the low-voltage circuit 20 are arranged separately so that an overlapping length between the low-voltage circuit 20 and the high-voltage circuit 10 is reduced and an effect of the high-voltage circuit 10 on the low-voltage circuit 20 is reduced. Such design architecture in the embodiments of the present application facilitates the assembly of the battery pack, improves production efficiency, and enhances the impact resistance and control reliability of the battery pack.

Based on the preceding embodiment, optionally, referring to FIGS. 2 and 3, the battery energy distribution module 120 includes a positive battery energy distribution unit 121 and a negative battery energy distribution unit 122, the positive electrode of the cells 110 is connected to a power supply terminal of the positive battery energy distribution unit 121 by the flexible composite busbar 210, and the negative electrode of the cells 110 is connected to a power supply terminal of the negative battery energy distribution unit 122 by the flexible composite busbar 210; the flexible composite busbar 210 includes an electrode O-temper aluminum busbar 211 and a flexible copper busbar 212, the electrode O-temper aluminum busbar 211 is fixed on an electrode of the cells 110, one end of the flexible copper busbar 212 is connected to the electrode O-temper aluminum busbar 211, and the other end of the flexible copper busbar 212 is connected to the battery energy distribution module 120.

As can be readily appreciated, the battery pack has an overall positive electrode and an overall negative electrode. The overall positive electrode and the overall negative electrode of the battery pack are connected to the positive battery energy distribution unit 121 and the negative battery energy distribution unit 121 respectively by the flexible composite busbar 210. An electrode O-temper aluminum busbar 211 is fixed on the overall positive electrode and the overall negative electrode of the battery pack to provide a reliable connection point for a connection between the flexible copper busbar 212 and the cells 110. It is to be noted that since the flexible copper busbar 212 is relatively soft, the cells 110 may be considered as a rigid body relative to the flexible copper busbar 212, and the flexible copper busbar 212 may be considered as a flexible body. When the flexible body is directly connected to the rigid body, limited by the material performance of the flexible body, the flexible body is more easily worn than the rigid body in practical application. Therefore, when the rigid body is connected to the flexible body, an additional connection structure is required to connect the rigid body to the flexible body.

Referring to FIG. 3, it is to be noted that the positive battery energy distribution unit 121 and the negative battery energy distribution unit 122 may have the same structure or different structures, which may be determined according to actual requirements in practical application and is not limited in this embodiment. It is to be understood that the positive battery energy distribution unit 121 and/or the negative battery energy distribution unit 122 with different structures has different positions for the interfaces. Thus, the required flexible composite busbar 210 is different in length. Therefore, the length of the flexible composite busbar 210 may be determined according to actual requirements in practical application and is not limited in this embodiment.

For example, the electrode O-temper aluminum busbar 211 of the flexible composite busbar 210 may be fixedly connected to the cells 110 by a bolt. The electrode of the respective cell 110 is provided with an opening, the electrode O-temper aluminum busbar 211 is also provided with an opening at the position corresponding to the opening of the electrode, and the bolt passes through the opening of the electrode O-temper aluminum busbar 211 and the opening of the electrode of an output module 110 to fix the electrode O-temper aluminum busbar 211 to the cell 110. The electrode O-temper aluminum busbar 211 of the flexible composite busbar 210 may be connected to the cell 110 by a snap. Snap structures are provided in the electrode O-temper aluminum busbar 211 and the cell 110, respectively, and the electrode O-temper aluminum busbar 211 is fixed on the cell 110 by the snap structures.

Based on the preceding multiple embodiments, optionally, referring to FIGS. 1, 2, and 3, the cells 110 are arranged in a central area of the battery pack, the high-voltage circuit 10 runs through the central area of the battery pack, the low-voltage circuit 20 is disposed on a side of the central area of the battery pack, and the high-voltage circuit 10 is parallel to the low-voltage circuit 20.

Based on the preceding embodiments, optionally, still referring to FIG. 2, the flexible composite busbar 210 further includes a composite busbar holder 213 configured to support the flexible copper busbar 212. It is to be understood that the composite busbar holder 213 is provided with a busbar fixing sleeve, and the flexible copper busbar 212 is reliably connected to the composite busbar holder 213 by passing through the busbar fixing sleeve.

Based on the preceding embodiments, optionally, the cells 110 are connected by a flexible integrated busbar 160, and the flexible integrated busbar 160 includes a cell O-temper aluminum busbar 161, a flexible circuit board 162, and a busbar holder 163.

The cell O-temper aluminum busbar 161 is fixed on the cells 110 by the busbar holder 163, the flexible circuit board 160 is disposed on a side of the busbar holder 163, and the busbar holder 163 is configured to support the cell O-temper aluminum busbar 161 and the flexible circuit board 162.

The cell O-temper aluminum busbar 161 includes a first aluminum busbar, a second aluminum busbar, and a third aluminum busbar.

As can be readily appreciated, the multiple cells 110 are arranged in parallel in the battery pack, and electrodes of two adjacent cells 110 in the battery pack have opposite polarities. For example, electrodes of each cell 110 are disposed at an upper position and a lower position. The electrode of a cell 110 at the upper position is a positive electrode and the electrode of the cell 110 at the lower position is a negative electrode. A cell adjacent to the cell 110 has an opposite polarity, that is, the electrode at the upper position is a negative electrode and the electrode at the lower position is a positive electrode. The battery pack includes the multiple cells 110 disposed in this manner, a row of electrodes at the upper position constitutes an upper electrode group and a row of electrodes at the lower position constitutes a lower electrode group. Multiple electrodes in the upper electrode group of a first cell group are connected to each other by the first aluminum busbar, multiple electrodes in the lower electrode group of the first cell group are connected in one-to-one correspondence to multiple electrodes in the upper electrode group of a second cell group by the second aluminum busbar, and multiple electrodes in the lower electrode group of the second cell group are connected to each other by the third aluminum busbar. That is, multiple cells in the first cell group and multiple cells in the second cell group are connected in series by the cell O-temper aluminum busbar 161. The flexible circuit board is configured to acquire the temperature and voltage of the cells and output the acquired temperature data and voltage data to the control module 130.

Based on the preceding embodiments, optionally, still referring to FIGS. 1 and 2, the external interface 140 includes a fast charging interface 141, a discharging interface 142, a slow charging interface 143, and a communication interface 144.

A positive terminal of the fast charging interface 141 is connected to a fast charging positive electrode of the positive battery energy distribution unit 121, a negative terminal of the fast charging interface 141 is connected to a fast charging negative terminal of the negative battery energy distribution unit 122, and a data terminal of the fast charging interface 141 is connected to the control module 130. A positive terminal of the discharging interface 142 is connected to a discharging positive terminal of the positive battery energy distribution unit 121, a negative terminal of the discharging interface 142 is connected to a discharging negative terminal of the negative battery energy distribution unit 122, and a data terminal of the discharging interface 142 is connected to the control module 130. A positive terminal of the slow charging interface 143 is connected to a slow charging positive terminal of the positive battery energy distribution unit 121, the slow charging interface 143 is connected to a slow charging negative terminal of the negative battery energy distribution unit 122, and a data terminal of the slow charging interface 143 is connected to the control module 130. The communication interface 144 is connected to the control module 130.

For example, the positive terminal of the fast charging interface 141 is connected to the fast charging positive terminal of the positive battery energy distribution unit 121 by a rigid copper busbar of 20×3 mm²; the negative terminal of the fast charging interface 141 is connected to the fast charging negative terminal of the negative battery energy distribution unit 122 by a rigid copper busbar of 20×3 mm²; the positive terminal of the discharging interface 142 is connected to the discharging positive terminal of the positive battery energy distribution unit 121 by a rigid copper busbar of 20×2 mm²; the negative terminal of the discharging interface 142 is connected to the discharging negative terminal of the negative battery energy distribution unit 122 by a rigid copper busbar of 20×3 mm²; the cells 110 are connected to the power supply terminal of the positive battery energy distribution unit 121 by a combination of O-temper aluminum (1060 O-temper aluminum) busbar of 40×2.5 mm² and a flexible copper busbar of 20×3 mm²; the cells 110 are connected to the power supply terminal of the negative battery energy distribution unit 122 by a combination of O-temper aluminum (1060-O-temper aluminum) busbar of 40×2.5 mm² and a flexible copper busbar of 20×3 mm²; the positive terminal of the slow charging interface 143 is connected to the slow charging positive terminal of the positive battery energy distribution unit 121 by a cable of 6 mm²; the slow charging interface 143 is connected to the slow charging negative terminal of the negative battery energy distribution unit 122 by a cable of 6 mm²; and cross-connection of the cells 110 uses the O-temper aluminum (1060-O-temper aluminum) of 40×2.5 mm².

Still referring to FIGS. 1 and 2, the battery pack further includes a housing 150, the fast charging interface 141 and the discharging interface 142 are disposed on a first side edge of the housing 150, the slow charging interface 143 and the communication interface 144 are disposed on a second side edge of the housing 150, and the first side edge and the second side edge are opposite to each other.

Based on the preceding embodiments, optionally, still referring to FIGS. 1 and 2, the battery energy distribution module 120 further includes a positive current acquisition unit 123 and a negative current acquisition unit 124.

The positive current acquisition unit 123 is connected in series in the positive battery energy distribution unit 121, and the negative current acquisition unit 124 is connected in series in the negative battery energy distribution unit 122. The positive current acquisition unit 123 is configured to acquire a current through the positive battery energy distribution unit 121, and the negative current acquisition unit 124 is configured to acquire a current through the negative battery energy distribution unit 122.

The positive current acquisition unit 123 and the negative current acquisition unit 124 are located between an area where the fast charging interface 141 and the discharging interface 142 are located and an area where the cells 110 are located.

The high-voltage circuit 10 includes a circuit for connecting the cells 110 to the battery energy distribution module 120 and circuits for connecting the battery energy distribution module 120 to the fast charging interface 141, the discharging interface 142, and the slow charging interface 143.

Based on the preceding embodiments, optionally, still referring to FIGS. 1 and 2, the control module 130 includes a master board 131 and at least one slave board 132.

A fast charging data terminal of the master board 131 is connected to the fast charging interface 141. A slow charging data terminal of the master board 131 is connected to the slow charging interface 143. A discharging data terminal of the master board 131 is connected to the discharging interface 142. A first communication terminal of the master board 131 is connected to the communication interface 144. A first control terminal of the master board 131 is connected to a control terminal of the positive battery energy distribution unit 121. A second control terminal of the master board 131 is connected to a control terminal of the negative battery energy distribution unit 122. A positive current acquisition terminal of the master board 131 is connected to the positive current acquisition unit 123. A negative current acquisition terminal of the master board 131 is connected to the negative current acquisition unit 124. The master board 131 is configured to acquire charging and discharging data and perform external communication. A data acquisition terminal of the slave board 132 is connected to the cells 110. A communication terminal of the slave board 132 is connected to a second communication terminal of the master board 131. The at least one slave board 132 is configured to acquire the temperature of the cells 110 and the voltage of the cells 110.

The low-voltage circuit 20 includes a circuit for connecting the master board 131 to the at least one slave board 132, a circuit for connecting the master board 131 to the communication interface 144, and a circuit for connecting the at least one slave board 132 to the cells 110.

Based on the preceding embodiments, optionally, still referring to FIGS. 1 and 2, the battery pack is provided with voltage and temperature acquisition interfaces 111, the voltage and temperature acquisition interfaces 111 are configured to output the voltage data of the cells 110 and the temperature data of the cells 110, the voltage and temperature acquisition interfaces 111 are connected to the at least one slave board 132, and the voltage and temperature acquisition interfaces 111 are disposed on a second side of the cells 110, where the second side of the cells 110 is a side adjacent to the second side edge of the housing 150. As can be readily appreciated, the flexible circuit board 162 of the flexible integrated busbar 160 is connected to the slave board 132 by the voltage and temperature acquisition interfaces 111, and the flexible circuit board 162 transmits the acquired temperature data and voltage data of the cells 110 to the slave board 132 through the voltage and temperature acquisition interfaces 111 to transmit the temperature data and the voltage data to the master board 131.

The master board 131 and the battery energy distribution module 120 are disposed on the same side of the housing 150, and the at least one slave board 132 is disposed on a side of the housing 150 away from the master board 131.

It is to be understood that the space inside the housing 150 of the battery pack is limited and the current acquisition accuracy of the positive current acquisition unit 123 and the negative current acquisition unit 124 is affected by the length of an acquisition harness, where the longer the length of the acquisition harness, the lower the acquisition accuracy of the positive current acquisition unit 123 and the negative current acquisition unit 124. It is to be noted that the acquisition harness includes a positive acquisition harness and a negative acquisition harness. The master board 131 is connected to the positive current acquisition unit 123 by the positive acquisition harness and the master board 131 is connected to the negative current acquisition unit 124 by the negative acquisition harness. Therefore, the master board 131 and the battery energy distribution module 120 are disposed on the same side.

FIG. 4 is a schematic diagram of an electric vehicle according to an embodiment of the present application. Referring to FIG. 4, an electric vehicle 20 includes a battery pack 10 according to any preceding embodiment. It is to be understood that a relative position between the battery pack 10 and a vehicle body in FIG. 4 is merely illustrative, and the battery pack 10 may be installed in the rear or middle of the electric vehicle 20 or at another position of the electric vehicle 20, which is not limited in this embodiment.

## Claims

1. A battery pack, comprising:
a plurality of cells;
a flexible composite busbar connected to the plurality of cells;
a battery energy distribution module connected to the flexible composite busbar;
a control module connected to the battery energy distribution module and configured to control the battery energy distribution module to be turned on and turned off; and
an external interface connected to the control module and configured to be connected to an external circuit;
wherein a circuit for connecting the battery energy distribution module to the external interface is configured to be a high-voltage circuit, a circuit for connecting the control module to the external interface is configured to be a low-voltage circuit, and the low-voltage circuit and the high-voltage circuit are arranged separately.

2. The battery pack of claim 1, wherein the flexible composite busbar comprises an electrode O-temper aluminum busbar and a flexible copper busbar;
wherein the electrode O-temper aluminum busbar is fixed on an electrode of the plurality of cells, one end of the flexible copper busbar is connected to the electrode O-temper aluminum busbar, and the other end of the flexible copper busbar is connected to the battery energy distribution module.

3. The battery pack of claim 1, wherein the plurality of cells are arranged in a central area of the battery pack, the high-voltage circuit runs through the central area of the battery pack, the low-voltage circuit is disposed on a side of the central area of the battery pack, and the high-voltage circuit is parallel to the low-voltage circuit.

4. The battery pack of claim 2, wherein the flexible composite busbar further comprises a composite busbar holder configured to support the flexible copper busbar.

5. The battery pack of any one of claims 1 to 4, wherein the plurality of cells are connected by a flexible integrated busbar, wherein the flexible integrated busbar comprises a cell O-temper aluminum busbar, a flexible circuit board, and a busbar holder; and
the cell O-temper aluminum busbar is fixed on the plurality of cells by the busbar holder, the flexible circuit board is disposed on a side of the busbar holder, and the busbar holder is configured to support the cell O-temper aluminum busbar and the flexible circuit board.

6. The battery pack of claim 1, wherein the battery energy distribution module comprises a positive battery energy distribution unit and a negative battery energy distribution unit; and
a positive electrode of the plurality of cells is connected to a power supply terminal of the positive battery energy distribution unit by the flexible composite busbar, and a negative electrode of the plurality of cells is connected to a power supply terminal of the negative battery energy distribution unit by the flexible composite busbar.

7. The battery pack of claim 1, wherein the external interface comprises a fast charging interface, a discharging interface, a slow charging interface, and a communication interface;
a positive terminal of the fast charging interface is connected to a fast charging positive terminal of a positive battery energy distribution unit, a negative terminal of the fast charging interface is connected to a fast charging negative terminal of a negative battery energy distribution unit, and a data terminal of the fast charging interface is connected to the control module; a positive terminal of the discharging interface is connected to a discharging positive terminal of the positive battery energy distribution unit, a negative terminal of the discharging interface is connected to a discharging negative terminal of the negative battery energy distribution unit, and a data terminal of the discharging interface is connected to the control module; a positive terminal of the slow charging interface is connected to a slow charging positive terminal of the positive battery energy distribution unit, the slow charging interface is connected to a slow charging negative terminal of the negative battery energy distribution unit, and a data terminal of the slow charging interface is connected to the control module; and the communication interface is connected to the control module; and
the battery pack further comprises a housing, the fast charging interface and the discharging interface are disposed on a first side edge of the housing, the slow charging interface and the communication interface are disposed on a second side edge of the housing, and the first side edge and the second side edge are opposite to each other.

8. The battery pack of claim 7, wherein the battery energy distribution module further comprises a positive current acquisition unit and a negative current acquisition unit;
the positive current acquisition unit is connected in series in the positive battery energy distribution unit and the negative current acquisition unit is connected in series in the negative battery energy distribution unit; and the positive current acquisition unit is configured to acquire a current through the positive battery energy distribution unit and the negative current acquisition unit is configured to acquire a current through the negative battery energy distribution unit;
the positive current acquisition unit and the negative current acquisition unit are located at an area between an area where the fast charging interface and the discharging interface are located and an area where the plurality of cells are located; and
the high-voltage circuit comprises a circuit for connecting the plurality of cells to the battery energy distribution module and circuits for connecting the battery energy distribution module to the fast charging interface, the discharging interface, and the slow charging interface.

9. The battery pack of claim 7, wherein the control module comprises a master board and at least one slave board;
a fast charging data terminal of the master board is connected to the fast charging interface; a slow charging data terminal of the master board is connected to the slow charging interface; a discharging data terminal of the master board is connected to the discharging interface; a first communication terminal of the master board is connected to the communication interface; a first control terminal of the master board is connected to a control terminal of the positive battery energy distribution unit; a second control terminal of the master board is connected to a control terminal of the negative battery energy distribution unit; a positive current acquisition terminal of the master board is connected to a positive current acquisition unit; a negative current acquisition terminal of the master board is connected to a negative current acquisition unit; and the master board is configured to acquire charging and discharging data and perform external communication;
a data acquisition terminal of the at least one slave board is connected to the plurality of cells; a communication terminal of the at least one slave board is connected to a second communication terminal of the master board; and the at least one slave board is configured to acquire a temperature of the plurality of cells and a voltage of the plurality of cells; and
the low-voltage circuit comprises a circuit for connecting the master board to the at least one slave board, a circuit for connecting the master board to the communication interface, and a circuit for connecting the at least one slave board to the plurality of cells.

10. The battery pack of claim 9, wherein the battery pack is provided with voltage and temperature acquisition interfaces, wherein the voltage and temperature acquisition interfaces are configured to output voltage data of the plurality of cells and temperature data of the plurality of cells, and the voltage and temperature acquisition interfaces are connected to the at least one slave board; and
the voltage and temperature acquisition interfaces are disposed on a second side of the plurality of cells, wherein the second side of the plurality of cells is a side adjacent to the second side edge of the housing.

11. The battery pack of claim 9, wherein the master board and the battery energy distribution module are disposed on a same side of the housing, and the at least one slave board is disposed on a side of the housing away from the master board.

12. An electric vehicle, comprising the battery pack of any one of claims 1 to 11.
